# EUROPEAN PATENT SPECIFICATION

(11) **EP 3 572 360 B1**
(45) Date of publication and mention of the grant of the patent: **11.08.2021**
(21) Application number: 18173663.8
(22) Date of filing: 22.05.2018
(51) Int. Cl.: B65G 47/57, B65G 43/10, B08B 9/20

(54) **A PROCESSING UNIT FOR WASHING EMPTY ARTICLES AND RELATED METHOD**
VERARBEITUNGSEINHEIT ZUM WASCHEN LEERER ARTIKEL UND ZUGEHÖRIGES VERFAHREN
UNITÉ DE TRAITEMENT POUR LAVER DES ARTICLES VIDES ET PROCÉDÉ ASSOCIÉ

(43) Date of publication of application: 27.11.2019
(73) Proprietor: Sidel End of Line & Tunnels Solutions Srl, 43126 Parma (IT)
(72) Inventor: BERZAGHI, Claudio, 37139 VERONA (IT); COMPOSTA, Michele, 37139 VERONA (IT)
(74) Representative: Sidel Group

(56) References cited:
- EP-A2- 0 739 855
- DE-A1-102009 011 333
- DE-B3-102004 008 946
- US-A1- 2015 375 881
- US-A1- 2017 233 195

## Description

The present invention relates to a processing unit for processing articles, in particular a washing unit for washing empty articles.

The present invention also relates to a method for processing articles, in particular to a method for washing empty articles.

Washing units are known with the purpose of cleaning the empty articles upstream of a filling and a labelling unit, in which the articles are respectively filled with the pourable product and labelled with respective labels.

An example of washing unit is known, e.g. from EP2727660 in the name of the same of Applicant.

The known washing unit comprises:
- a feeding system;
- a washing tunnel;
- a looped first chain conveyor, which is adapted to advance the articles along a treatment path inside the washing tunnel and from an inlet station to an outlet station;
- a plurality of nozzles for ejecting a washing agent inside the inner volume of the articles travelling along the treatment path;
- a plurality of successive treatment zones through which the first chain conveyor advances the articles inside the washing tunnel; and
- a discharge system, which is fed at the outlet station by the looped first chain conveyor with the washed articles.

In detail, the feeding system comprises an endless second conveyor and a sequencing device interposed between the second endless conveyor and the inlet station of the first chain conveyor.

The endless second conveyor comprises a plurality of channels along which respective rows of articles are advanced towards the inlet station of the chain first conveyor.

The sequencing device withdraws, one after the other, the empty articles from respective rows of the second endless conveyor and convey them to the first chain conveyor with a given rate to the inlet station.

The first chain conveyor comprises a plurality of bars, which are aligned orthogonally to the treatment path and define a plurality of pockets for receiving respective articles.

The treatment zones are arranged between the inlet station and the outlet station.

In detail, the treatment zones comprise: a prewash zone, a first cleaning zone, a second cleaning zone and a final rinsing zone.

The prewash zone, the first cleaning zone, the second cleaning zone comprise respective baths filled with a chemical agent and through which the articles are advanced.

The discharge system comprises, proceeding as of the outlet station:
- a descending device, which withdraws one after the other the rows of washed articles from the looped chain conveyor; and
- a third endless conveyor, which receives the rows of washed articles from the descending device and advance them away from the washing station.

Very briefly, the sequencing device comprises:
- a first frame; and
- a motorized lever articulated with respect to the frame and comprising a pair of opposite first fingers.

The descending device comprises, in turn:
- a second frame; and
- a plurality of motorized second fingers.

In particular, the first fingers contact the bottom portion of the articles, so as to transfer the articles from the second endless conveyor to the first chain conveyor.

In a similar way, the second fingers contact the articles, so as to guide the articles from the first chain conveyor to the third looped conveyor.

Each second and third endless conveyor comprises:
- a relative frame; and
- a relative conveying belt looped around the frame.

The transfer of the articles to be washed from the sequencing device to the first chain conveyor occurs at the inlet station at which the paths of the sequencing device and the first chain conveyor are incident to one another.

Similarly, the transfer of the washed articles from the first chain conveyor to the descending device occurs at the outlet station at which the paths of the chain first conveyor and of the descending device are incident to one another.

In order to properly transfer the articles to be washed at the inlet station, it is required that the sequencing device and the chain first conveyor assume a precise angular position with respect to one another at the inlet station.

In particular, the first fingers of the sequencing device and the pockets of the first chain conveyor are required to be arranged in a precise mutual angular position at the inlet station.

Otherwise, there is the risk that the operation of the chain first conveyor is impaired.

In particular, the articles can be crushed or broken or can block the normal operation of the washing unit.

In some cases, there is even the risk that the operation of the chain first conveyor must be interrupted.

In a similar way, in order to correctly transfer the washed articles at the outlet station, it is required that the chain first conveyor and the descending device assume a precise angular position with respect to one another at the outlet station.

In particular, the pockets of the first chain conveyor and the second fingers of the descending device are required to be arranged in a precise mutual angular position at the outlet station.

Otherwise, there is the risk that the washed article may violently impact against the second fingers, and that some articles fall on the endless third conveyor, thus impairing the operation thereof.

In the known solutions, an operator visually checks the mutual position between the descending device and the first chain conveyor and/or between the chain first conveyor and the descending device. The operation of the washing unit is accordingly corrected or even interrupted if necessary.

Furthermore, in the known solutions, the operator removes the articles which have fallen on the third conveyor
It is known in the art to detect the actual mutual position of a first conveyor and a second conveyor with respect to one another on the basis of sensed quantities, such as a parameter relative to a movement, the position of the transported article, a torque or a pressure (see US 2017/0233195 A1, US 2015/0375881 A1, EP 0 739 855 A2).

A need is felt within the industry to reduce the previously identified risks connected with the known washing machines as efficiently as possible.

It is an object of the present invention to provide a processing unit for processing articles, which meets the above requirements.

The aforementioned object is achieved by the present invention as it relates to a processing unit for processing articles, in particular a washing unit for washing empty articles, as claimed in claim 1.

The present invention also relates to a method of processing articles, in particular a method for washing empty articles, as claimed in claim 13.

One preferred embodiment is hereinafter disclosed for a better understanding of the present invention, by way of non-limitative example and with reference to the accompanying drawings, in which:
- Figure 1 is a lateral view of a washing unit for treating empty articles comprising a plurality of bars fitted with pockets having respective end portions, in accordance with the invention;
- Figure 2 is a lateral view in an enlarged scale of first components of an inlet portion of the washing unit of Figure 1, with parts removed for clarity;
- Figure 3 is a frontal view in an enlarged scale of second components of the Figures 1 and 2, with parts removed for clarity;
- Figure 4 is a frontal view in a further enlarged scale of third components of the Figures 1 and 2, with parts removed for clarity;
- Figure 5 is a perspective view of a third component of the washing unit of Figures 1 to 4, with parts removed for clarity; and
- Figure 6 is a perspective view of a third component of the washing unit of Figures 1 to 5, with parts removed for clarity.

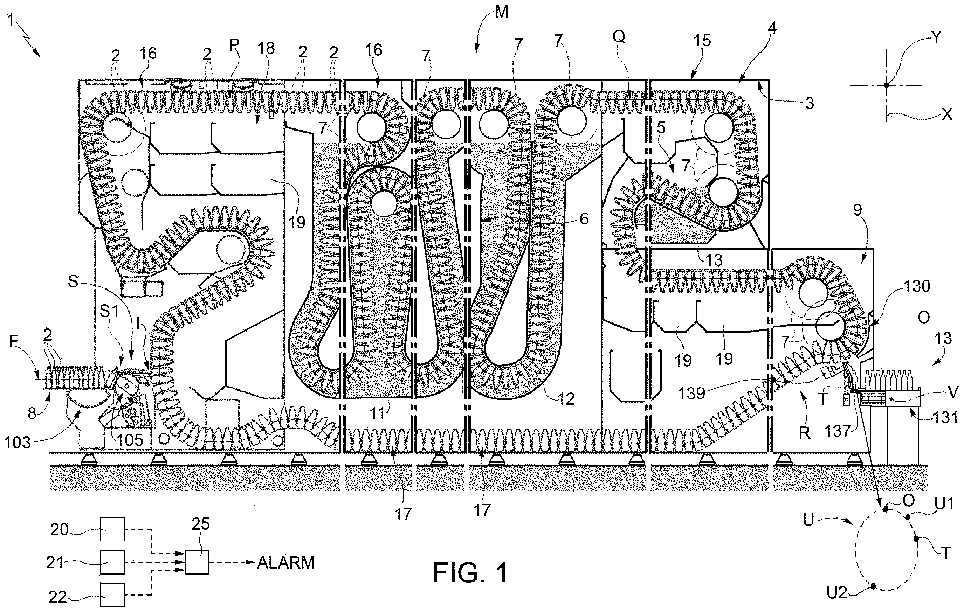

With reference to figure 1, numeral 1 indicates a processing unit, in particular washing unit for washing articles 2, in particular empty articles intended to be filled with a pourable product.

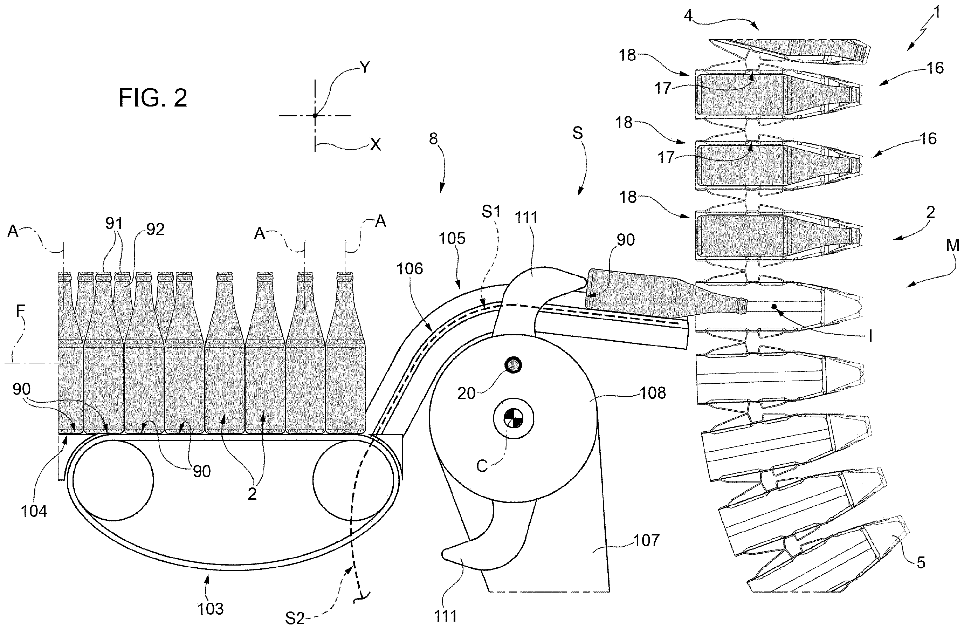

In detail, each article 2 extends along an axis A and comprises (Figure 2) :
- a bottom portion 90;
- a neck portion 91; and
- a body 92.

Axis A is vertical, in the embodiment shown.

As it will be evident from the following of the present description, articles 2 are conveyed along a path M inside washing unit 1.

Path M comprises, in sequence, a portion S, a branch Q and portions U, V.

Washing unit 1 substantially comprises:
- a washing tunnel 3, which is fed with empty articles 2 to be washed and in which articles 2 are washed;
- a chain conveyor 4 for advancing articles 2 inside washing tunnel 3 along a closed loop path P; and
- a plurality of treatment zones 5, which are arranged inside washing tunnel 3 and comprise, in the embodiment shown, respective tanks 6 filled with respective cleaning agent and through which chain conveyor 4 advances articles 2.

With reference to Figure 1, it is possible to identify:
- a direction X orthogonal to path P and horizontally arranged; and
- a direction Y orthogonal to both path P and direction X and vertically arranged in the embodiment shown.

Washing unit 1 also comprises:
- a feeding system 8, which feeds a sequence of rows 18 of articles 2 to be cleaned to chain conveyor 4 along a direction F and at an inlet station I of washing tunnel 3; and
- an outfeed system 13, which receives a sequence of rows of washed articles 2 from chain conveyor 4 at an outlet station 0 of washing tunnel 3.

Direction F is, in the embodiment shown, horizontal and orthogonal to axes A of articles 2.

In greater detail, feeding system 8 comprises, with special reference to Figure 2:
- a plurality of endless conveyors 103 (only schematically shown) comprising respective channels 104 aligned along path P;
- a motor (not shown in the Figures), which drives conveyors 103; and
- a sequencing device 105, which receives a plurality of rows 18 of articles 2 from relative conveyors 103 and feeds, one after the other, articles 2 of rows 18 to inlet station I of washing tunnel 3.

In detail, rows 18 are aligned parallel to direction X.

Sequencing device 105 comprises a frame.

In particular, sequencing device 105 comprises, for each channel 104,:
- a conveying surface 106, which extends from conveyor 103 to station I of washing tunnel 3 along an arch-shaped surface;
- a lever 107 which is hinged to the frame about an hinge axis; and
- a lever 108 which is hinged to lever 107 about an axis C parallel to hinge axis of lever 108 and comprises two end fingers 111 adapted to contact bottom portions 90 of articles 2 and to thrust articles 2 along conveying surface 106.

Axis C and hinge axis of lever 107 are, in the embodiment shown, parallel to one another.

Axis C and hinge axis of lever 107 are, in the embodiment shown, orthogonal to axis A and direction F.

Sequencing device 105 also comprises a pair of actuators for causing the rotation of levers 107 with respect to frame about hinge axis thereof and the rotation of levers 108 with respect to levers 107 about respective axes C.

Thanks to the presence of levers 107, 108 hinged to another, sequencing device 105 can transfer, one after the other, articles 2 of rows 18 along arch-shaped portion S of path M towards inlet station I of washing tunnel 3 with the right position, horizontal in the embodiment shown.

In particular, sequencing device 105 can transfer article 2 of respective channel 104 along a not circular arch.

Path P comprises work branch Q and a return branch R.

Work branch Q extends from inlet station I to outlet station 0 while return branch R extends from outlet station O to return station I.

Work branch Q is part of path M.

Chain conveyor 4 advances articles 2 along work branch Q and returns without articles 2 along return branch R.

In the embodiment shown, path P lies on a vertical plane, and conveying surface 106 and chain conveyor 4 advance articles 2 along a horizontal direction.

Furthermore, chain conveyor 4 comprises, along work branch Q:
- a plurality of driven and driving wheels 7, which mesh with conveyor chain 4 and causes the movement thereof along path P; and
- a plurality of stationary supporting structures 19, which interacts with chain conveyor 4 to prevent the bending thereof.

As shown in Figure 1, chain conveyor 4 comprises:
- a pair of chains 15 (only one of which is shown in Figure 1) elongated parallel to path P and parallel to one another; and
- a plurality of subsequent conveying beams 16, which extend between chains 15 and orthogonally to chains 15 and path P.

Each beam 16 comprises (Figure 2) a plurality of pockets 17 for holding relative articles 2.

In particular, pockets 17 of each beam 16 are adapted to receive forward-most articles 2 of respective rows 18 travelling at inlet station I from sequencing device 105.

Pockets 17 of each beam 16 are aligned along direction X. Accordingly, also articles 2, when conveyed along work branch Q and housed inside relative pockets 17, are aligned onto relative beams 16 along direction X to form respective rows 18.

Treatment zones 5 comprise a prewash zone, a first cleaning zone, a second cleaning zone.

The prewash zone, the first cleaning zone, the second cleaning zone comprise respective baths 11, 12, 13 filled with a cleaning agent.

For a better understanding, in Figure 1, the volume occupied by the cleaning solution has been highlighted by colouring the relative cross section in grey.

Due to the temperature of the cleaning agent, articles 2 are heated up as they travel inside bath 11, 12, 13.

Treatment zones 5 also comprise a rinsing zone 9, which is aimed to remove the chemical agents out of articles 2 and to cool them down. Rinsing zone 9 comprises a plurality of sprinkling device acting one after the other on articles 2.

Bath 11, 12, 13 and rinsing zone 9 are arranged, in this succession, along work branch Q of path P.

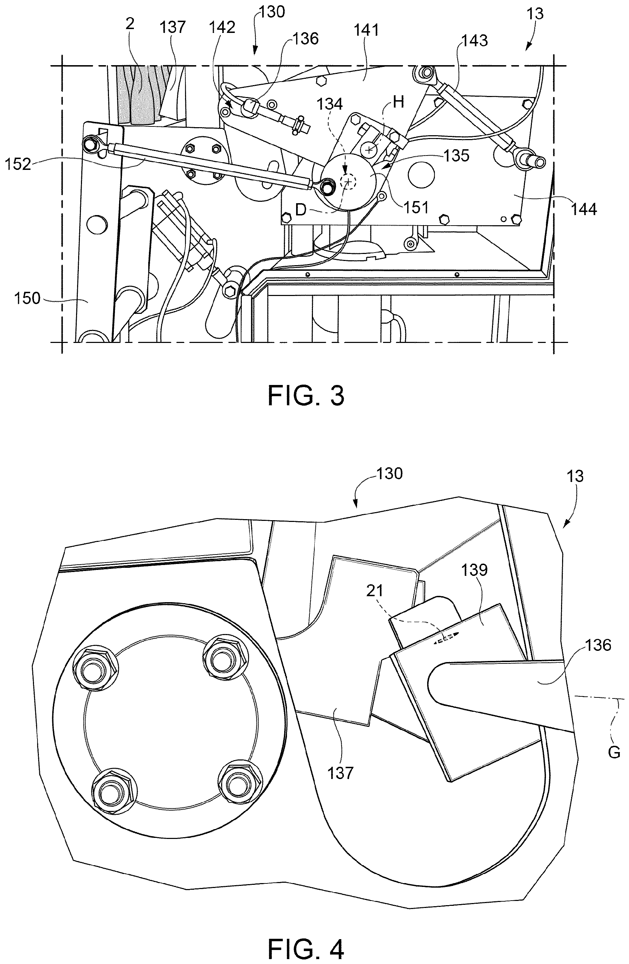

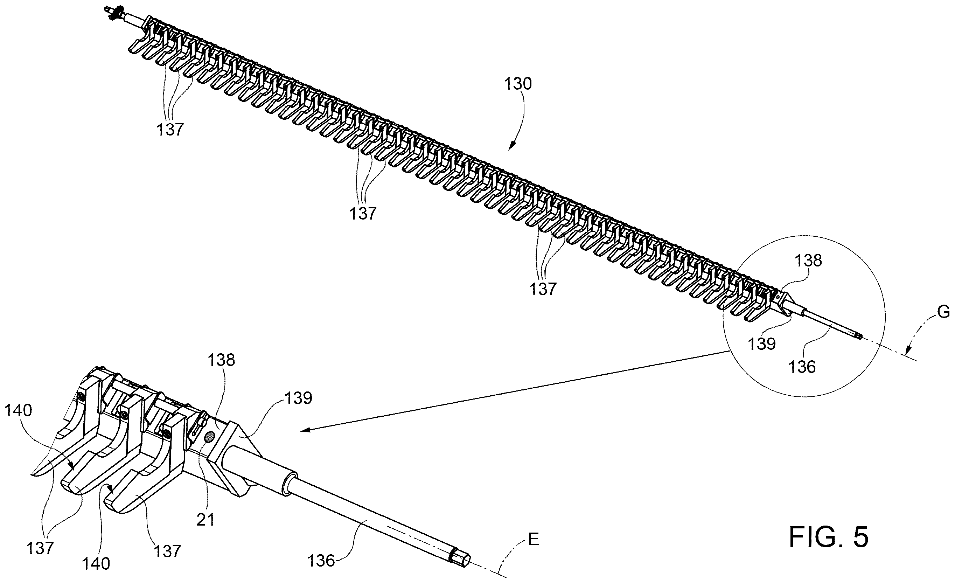

Outfeed system 13 comprises, in turn (Figures 3 to 6):
- a descending device 130, which receives, one after the other, rows 18 of articles 2 from beams 16 of chain conveyor 4 at outlet station 0 and guides articles 2 along an arch-shaped portion U;
- an intermediate stationary table 132, which is fed with rows 18 from descending device 130; and
- an outfeed conveyor 131, which is arranged on the opposite side of table 132 with respect to descending device 130, and is adapted to move rows 18 away from washing unit 1 and along a rectilinear shaped portion V.

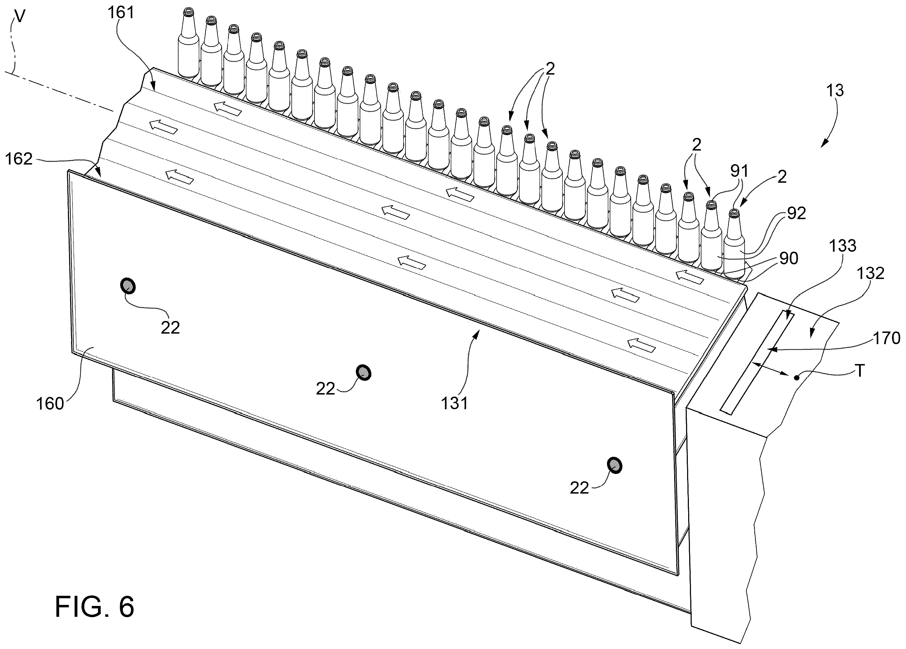

Outfeed system 13 further comprises a pushing device 133 (only schematically shown in Figure 6) for pushing rows 18 of articles 2 discharged by descending device 130 on table 132 towards outfeed conveyor 131.

In greater detail, pushing device 133 comprises a pusher 170 movable from table 132 to conveyor 131 after descending device 130 has discharged articles 2 on table 132.

Pusher 170 is movable back from conveyor 131 to table 132 when descending device 130 moves back towards outlet station O.

In detail, descending device 130 comprises (Figures 3 to 6) :
- a frame 135;
- a motorized shaft 134 (only schematically shown in the attached Figures) which is driven in rotation about an its own axis D;
- a shaft 136 which rotates eccentrically around axis D and is operatively connected to shaft 134; and
- a plurality of fingers 137, which are fitted to shaft 136, receives bottom 90 articles 2 of respective rows 18 at outlet station 0 and guide articles 2 on table 132.

In particular, shaft 136 extends along an its own axis G parallel to axis D.

Furthermore, descending device 130 comprises (Figures 3 to 6) :
- a supporting structure 138 to which fingers 137 are fitted; and
- a crossbar 139 which is interposed between structure 138 and shaft 136.

In particular, fingers 137 comprise respective free portions 140 which contact bottom 90 of relative articles 2.

Descending device 130 further comprises (Figure 3) a plate 141, triangular in the embodiment shown.

Plate 141 is eccentrically fitted to motorized shaft 134 and defines an elongated seat 142 engaged by an end of shaft 134 axially opposite to fingers 137.

Plate 141 is also connected to a fixed part 144 of washing unit 1 by means of a rod 143. Rod 143 is hinged to fixed part 144.

Pushing device 133 comprises, in turn:
- a lever 150 hinged to fixed part 144 about an its own axis (not shown in the Figures) parallel to axes D, G, rotationally reciprocating about its own axis, and operatively connected to pusher 170;
- a disk 151, which rotates eccentrically about an axis H with respect to plate 141; and
- a rod 152 hinged to an end of lever 150 and eccentrically hinged to disk 151.

Axes E and H are, in the embodiment shown, parallel to axis D.

Conveyor 131 comprises, in turn (Figure 6):
- a frame 160; and
- an endless conveying surface 161.

Surface 161 comprises a work branch 162 moving away washed articles 2 from transfer station T and a not-shown return branch.

It is possible to identify a mutual ideal position of fingers 111 of sequencing device 105 and pockets 17 of chain conveyor 4 which are set at inlet station I. This mutual ideal position ensures a transfer as smooth as possible of articles 2 to be washed from sequencing device 105 to chain conveyor 4 at inlet station I.

Similarly, it is possible to identify a mutual ideal positon of pockets 17 of chain conveyor 4 and of fingers 137 of descending device 130, which are set at outlet station O. This mutual ideal position ensures a transfer as smooth as possible of washed articles 2 from chain conveyor 4 to of descending device 130 at outlet station O.

Advantageously, washing unit 1 comprises:
- a plurality of sensors 20, 21, 22 for sensing a quantity associated to the vibratory state of sequencing device 105, descending device 130, and conveyor 131 respectively; and
- a control unit 25 configured to detect the actual mutual position of fingers 111 of sequencing device 105 and pockets 17 of chain conveyor 4 arranged at inlet station I, and/or the actual mutual position of pockets 17 and fingers 137 of descending device 130 at outlet station O.

Preferably, sensor 20 is fitted to a movable part of sequencing device 105, for example to lever 107 or to lever 108 (Figure 2).

Sensor 21 is fitted on a movable part of descending device 130, for example to frame 135 or to disk 151 or to supporting structure 138 (Figure 3).

Sensors 22 are fitted on a fixed part of outfeed conveyor 131 (Figure 6).

Furthermore, control unit 25 is configured to filter the signal formed by the trend of the quantity sensed by sensors 20, 21, 22 over the time.

In particular, control unit 25 is configured to disregard the portion of the signal which is not associated to the vibration deriving from the error in the mutual position between sequencing device 105 and chain conveyor 4 at inlet station I, and/or between chain conveyor 4 and descending device 130 at outlet station O.

In greater detail, sensors 20, 21, 22 are accelerometer, mono-axial accelerometer in the embodiment shown.

In the embodiment, shown, control unit 25 is configured to:
- receive from sensors 20, 21, 22 respective first signals reproducing the trend of the measured acceleration over the time;
- generate second signals, by filtering the first signals in order to disregard the accelerations not due to the error in the mutual position of sequencing device 105 and chain conveyor 4 at inlet station I, and/or of chain conveyor 4 and descending device 130 at outlet station 0; and
- calculate a significant value of the vibratory state of sequencing device 105, descending device 130 and conveyor 131, e.g. a root square mean, on the basis of the trend over time of the second signals.

Control unit 25 is also configured to generate an alarm or a pre-alarm in case the calculated significant value exceeds a threshold value.

With reference to sensors 20, 21, control unit 25 is preferably configured to:
- disregard the quantity sensed by sensors 20, 21 along stretches S1, U1 of paths S, U; and
- detect the actual mutual position of sequencing device 105 and chain conveyor 4 and of chain conveyor 4 and descending device 130 respectively, on the basis of the quantity sensed by sensors 20, 21 along stretches S2, U2 of respective paths S, U.

Still more precisely, fingers 111 contact bottom portions 90 of articles 2 along stretch S2 of path S and are detached from articles 2 along stretch S1 of path S (Figure 2).

Fingers 137 contact articles 2 along stretch U2 of portion U and is detached from articles 2 along stretch U1 of portion U (only schematically shown in Figures 1 and 2).

Preferably, control units 25 converts the first signals generated by sensors 20, 21 into respective third signals reproducing the sensed acceleration over the angular position of lever 108 and frame 135.

The operation of washing unit 1 is described in detail in the following, with reference only to articles 2 forming a single row 18 extending parallel to direction X.

In greater detail, articles 2 advance inside washing unit 1 along path M, which is formed by portion S, branch Q and portions U, V.

In particular, articles 2 advance inside respective channels 104 defined by respective conveyors 103 parallel to direction F.

Subsequently, fingers 111 of sequencing device 103 receive respective articles 2 from relative conveyors 103 and advance articles 2 to be washed along portion S towards inlet station I of washing tunnel 3 with the right position, horizontal in the embodiment shown.

At inlet station I, chain conveyor 4 withdraws articles 2 and advance them along work branch Q and through baths 11, 12, 13 filled with the cleaning agent. The articles 2 are accordingly washed.

Chain conveyor 4 discharges washed articles 2 to descending device 130 at outlet station O.

In particular, fingers 137 of descending device 130 guide washed articles 2 of row 18 from outlet station 0 to table 132.

Pushers 170 push articles 2 of row from table 132 to conveyor 131 at transfer station T.

In the meanwhile, fingers 137 rotate back from table 132 towards outlet station O.

Conveyor 131 receives washed articles 2 at transfer station T and moves them away from washing unit 1.

Sensors 20, 21, 22 generate respective first signals reproducing the trend over the time of the sensed acceleration of lever 108 of sequencing device 105, frame 135 of descending device 130 and of frame 160 of conveyor 131.

Control unit 25 receives these first signals from sensors 20, 21, 22.

Control unit 25 generates second signals by filtering first signals. In this way, control unit 25 disregards those portions of first signals reproducing accelerations of lever 108 and frame 135 which are not generated by an error in the mutual position between fingers 111 and pockets 17 at inlet station I, pockets 17 and fingers 137 at outlet station 0, and fingers 137 and conveyor 131 at transfer station T.

Finally, control unit 25 calculates a significant value, e.g. a root mean value, of the second signals and generates an alarm in case this significant value exceeds a threshold value.

Preferably, control unit 25 converts the first signals generated by sensors 20, 21 into respective third signals reproducing the sensed acceleration over the angular position of lever 108 and frame 135.

Furthermore, control unit 25 disregards the second signals associated to stretches S1, U1 of portions S, U; and detects the actual mutual position of fingers 111 and corresponding pockets 17 at inlet station I; and/or the actual mutual position of pockets 17 of chain conveyor 4 and corresponding fingers 137 at outlet station 0 respectively, on the basis of the second signal along stretches S2, U2 of respective portions S, U.

From an analysis of the features of processing unit 1 and to the method according to the present invention, the advantages it allows to obtain are apparent.

In particular, sensors 20, 21, 22 sense a quantity, the acceleration in the embodiment shown, associated to the vibratory state of sequencing device 105 and/or descending device 130 and/or conveyor 131, and generate respective first signals.

Control unit 25 detects the actual mutual position between fingers 111 and corresponding pockets 17 at inlet station I; and/or between pockets 17 and corresponding fingers 137 at outlet station 0, on the basis of the first signals generated by sensors 20, 21, 22 respectively.

In particular, the first signals generated by sensors 20, 21 are directly associated to the actual mutual position between fingers 111 and corresponding pockets 17 at inlet station I; and/or between pockets 17 and corresponding fingers 137 at outlet station 0 respectively. The first signal generated by sensor 22 are indirectly associated to the actual mutual position between pockets 17 and corresponding fingers 137 at outlet station O.

In this respect, the Applicant has found the vibratory state of sequencing device 105, descending device 130 and conveyor 131 is significant of the error in the mutual position respectively of fingers 111 and corresponding pockets 17 at inlet station I, pockets 17 and corresponding fingers 137 at outlet station O.

Very briefly, the higher the errors in the mutual positions at inlet station I and outlet station 0; the higher the respective impact of articles 2 on sequencing device 105, descending device 130 and conveyor 131; the higher the vibratory state sensed by respective sensors 20, 21, 22.

In this way, it possible promptly and reliably detect any excessive error in the mutual position between fingers 111 and corresponding pockets 17 at inlet station I; and/or between pockets 17 and corresponding fingers 137 at outlet station O.

Accordingly, the risks of interrupting the operation of chain conveyor 4, of damaging washed articles 2 due to a too violent impact against fingers 137 and the risk that some washed articles 2 may fall on conveyor 131 are dramatically reduced in comparison with the known solution acknowledged in the introductory part of the present description.

Furthermore, the presence of an operator that visually detects an excessive error in the mutual position between fingers 111 and corresponding pockets 17 at inlet station I and/or between pockets 17 and corresponding fingers 137 at outlet station 0 is no longer required.

In the very same way, the presence of an operator that removes washed articles 2 fallen on conveyor 131 is no longer required.

Thanks to the fact that they are arranged on a mobile part of respective sequencing device 105 and chain conveyor 4, sensor 20, 21 can sense the acceleration of sequencing device 105 and descending device 130 with a high degree of precision. This is due to the fact that sensor 20, 21 are mounted on movable elements - levers 107, 108 and supporting structure 138 or frame 135 - which are directly subjected to the inertial force caused by the interaction with corresponding pockets 17 at inlet and outlet station I, 0 respectively

In particular, control unit 25 detects the actual mutual positions of fingers 111 of sequencing device 105 and corresponding pockets 17 of chain conveyor 4 at inlet station I; and/or the actual mutual position of pockets 17 of chain conveyor 4 and corresponding fingers 137 of descending device 130 at outlet station 0 respectively, on the basis of the second signal along stretches S2, U2 of respective portions S, U.

In this way, the precision in the detection of the previously identified actual mutual positions is increased. This is due to the fact that control unit 25 takes into account only the stretches S2, U2 of portions S, U along which the interaction between fingers 111 and corresponding pockets 17 at inlet station I and between pockets 17 and corresponding fingers 137 at outlet station 0 actually takes place.

Clearly, changes may be made to the processing unit and to the method as described and illustrated herein without, however, departing from the scope of protection as defined in the accompanying claims.

In particular, it is evident that the processing unit can be another types of machine, wherever articles 2 are transferred between two subsequent conveyors.

For example, the claimed solution can be implemented in a filling machine or in a labelling machine.

## Claims

1. A processing unit (1) for processing articles (2), comprising conveying means (105, 4, 130, 131) for advancing said articles (2) along a path (M);
said conveying means (105, 4, 130, 131) comprising, in turn:
- at least one first conveyor (105, 4) which advances said articles (2) along a first portion (S, Q) of said path (M); and
- at least one second conveyor (4, 130), which advances said articles (2) along a second portion (Q, U) of said path (M); said second conveyor (4, 130) being arranged immediately downstream of said first conveyor (105, 4) proceeding according the advancing direction of said articles (2) along said path (M) and adapted to receive, in use, said articles (2) from said first conveyor (105, 4, 130) at a transfer station (I, 0);
said first conveyor (105, 4) and second conveyor (4, 130) being arrangeable in an ideal mutual position with respect to one another at said transfer station (I, 0);
**characterized by** comprising:
- sensor means (20, 21, 22) for sensing a quantity associated to the vibratory state of at least one of said first and second conveyor (105, 4; 4, 130); and
- a control unit (25) configured to detect the actual mutual position of said first conveyor (105, 4) and second conveyor (4, 130) with respect to one another, on the basis of said quantity sensed, in use, by said sensor means (20, 21, 22).

2. The processing unit of claim 1, **characterized in that** each said first and second conveyor (105, 4; 4, 130) comprises:
- a respective fixed frame (132; 135); and
- a respective movable element (111, 107; 136, 137, 139), which is movable with respect to said fixed frame (132) .

3. The processing unit of claim 1 or 2, **characterized in that** at least one of said first portion and second portion (S, Q; Q, U) is at least in part curved; said first portion (S, Q) and said second portion (Q, U) being incident with respect to one another at said transfer station (I, 0).

4. The processing unit of any one of the foregoing claims, **characterized in that** said control unit (25) is configured to:
- disregard the value of said quantity along a first stretch (S1; U1) of said at least one (S; U) of said first or second portion (S, Q; Q, U); and
- detect the actual mutual position of said first conveyor (4, 130) and second conveyor (130, 131) with respect to one another, on the basis of the value of said quantity only along a second stretch (S2, U2) of said at least one (S; U) of said first or second portion (S, Q; Q, U) .

5. The processing unit of claim 4, when depending on claim 2 or 3, **characterized in that** said movable element (111, 137) contacts, in use, said articles (2) along said second stretch (S2, U2) and is detached, in use, from said articles (2) along said first stretch (S1, U1).

6. The processing unit of any one of the foregoing claims, **characterized in that** said first conveyor (105, 4) and second conveyor (4, 130) comprise respective plurality of first and second seats (111, 17, 137; 17, 137);
each said article (2) being transferred, in use, from a relative said first seat (111, 17, 137) to a relative said second seat (17, 137) at said transfer station (I, 0).

7. The processing unit of any one of the foregoing claims, **characterized by** comprising a washing tunnel (3) inside which said articles (2) are washed.

8. The processing unit of claim 7, **characterized in that** said first conveyor (105, 4, 130) is a sequencing device (105) for advancing a sequence of one or more articles (2) to said second conveyor (4);
said second conveyor (4) being adapted to advance said sequence articles (2) inside said washing tunnel (3);
said sensor means (20) being arranged on said sequencing device (105), preferably on respective said movable element (107, 108).

9. The processing unit of claim 7, **characterized in that** said first conveyor (4) is adapted to advance a sequence of said articles (2) inside said washing tunnel (3) ;
said second conveyor (4, 130, 131) being a discharge device (130), which is fed, in use, with said sequence by said first conveyor (4) at said transfer station (0) and is adapted to convey said articles (2) towards a further conveyor (131);
said sensor means (21) being arranged on said second conveyor (130), preferably on respective said movable element (136, 137, 139).

10. The processing unit of claim 9, **characterized in that** said discharge device (130) comprises, in turn:
- a rotatable shaft (136);
- a plurality of fingers (137), which are fitted to said shaft (136) and are adapted to guide said articles (2) from said transfer station (0) towards said third conveyor (131); and
- a frame (135) integrally rotatable together with said shaft (136) and said fingers (137);
said sensor means (21) being arranged on said frame (135) .

11. The processing unit of claim 9 or 10, **characterized by** comprising an outfeed conveyor (131) which is fed, in use, with said sequences of articles (2) by said discharge device (130);
said sensor means (22) being fitted to said second conveyor (131), preferably on respective said fixed frame (160) .

12. The processing unit of any one of the foregoing clams, **characterized in that** said sensing means (20, 21, 22) comprise an accelerometer, preferably a mono-axial accelerometer.

13. A method of processing articles (2), comprising the steps of:
i) conveying said articles (2) along a first portion (R; S) of a path (M) by means of at least one first conveyor (103, 4);
ii) conveying said articles (2) along a second portion (S, U) of said path (M) by means of at least one second conveyor (4, 130);
iii) transferring said articles (2) from said first conveyor (103, 4) to said second conveyor (4; 130; 131) at a transfer station (I, 0);
said first conveyor (103, 4) and said second conveyor (4, 130) being arrangeable in an ideal mutual position with respect to one another at said transfer station (I; O);
**characterized by** comprising the further steps of:
iv) sensing a quantity associated to the vibratory state of at least one of said first and second conveyor (103, 4; 4, 130); and
v) detecting the actual mutual position of said first and second conveyor (103, 4; 4, 130) with respect to one another, on the basis of said quantity.

14. The method of claim 13, wherein at least one of said first portion (S, Q) and said second portion (Q, U) is at least in part curved; said first portion (S, Q) and second portion (Q, U) being incident at said transfer station (I, 0);
said method being **characterized by** comprising the further steps of:
vi) disregarding the value of said quantity along a first stretch (S1; U1) of said at least one (S; U) of said first or second portion (S, Q; Q, U); and
vii) detecting the actual mutual position of said first and second conveyor (105, 4; 4, 130) with respect to one another, on the basis of the value of said quantity only along a second stretch (S2; U2) of the said at least one (S, U) of said first or second portion (S, Q; Q, U).

15. The method of claim 13 or 14, **characterized by** comprising the further steps of:
viii) advancing a sequence of one or more of said articles (2) inside a washing tunnel (3).

16. The method of claim 15, **characterized in that** said step viii) is carried out by means of said first conveyor (4);
the method comprising the further step of:
ix) washing said articles (2) inside said washing tunnel (3); and
x) advancing said sequence said articles (2) inside said washing tunnel (3) by means of said second conveyor (4) ;
said step iv) comprising a step xi) of sensing a quantity associated to the vibratory state of said first conveyor (105), preferably associated to the vibratory state of a movable element (107, 108) of said first conveyor (105).

17. The method of claim 15, **characterized by** comprising the further steps of:
xii) washing said articles (2) inside said washing tunnel (3); and
xiii) advancing said articles (2) inside said washing tunnel (3) by means of said first conveyor (4); and
xiv) feeding said sequence of said washed articles (2) to said second conveyor (130) at said transfer station (0);
said step iv) comprising a step xv) of sensing a quantity associated to the vibratory state of said second conveyor (130), preferably associated to the vibratory state of a movable element (136, 137) of said second conveyor (130).

18. The method of any one of claims 15 to 17 **characterized by** comprising the further steps of xv) feeding said washed articles (2) from said second conveyor (130) to a third conveyor (131) at a further transfer station (T);
said step iv) comprising a step xvi) of sensing a quantity associated to the vibratory state of said second conveyor (131), preferably associated to the vibratory state of a frame (160) of said second conveyor (131).

## Patentansprüche

1. Bearbeitungseinheit (1) zum Bearbeiten von Gegenständen (2), Fördermittel (105, 4, 130, 131) zum Vorrücken der Gegenstände (2) entlang eines Weges (M) umfassend,
wobei die Fördermittel (105, 4, 130, 131) wiederum umfassen:
- mindestens einen ersten Förderer (105, 4), der die Gegenstände (2) entlang eines ersten Abschnitts (S, Q des Weges (M) vorrückt, und
- mindestens einen zweiten Förderer (4, 130), der die Gegenstände (2) entlang eines zweiten Abschnitts (Q, U) des Weges (M) vorrückt, wobei der zweite Förderer (4, 130) unmittelbar prozessabwärts des ersten Förderers (105, 4) angeordnet ist, gemäß der Vorrückrichtung der Gegenstände (2) entlang des Weges (M) fortfahrend und dafür eingerichtet, im Gebrauch die Gegenstände (2) an einer Überführungsstation (I, O) von dem ersten Förderer (105, 4) zu empfangen,
wobei der erste Förderer (105, 4) und der zweite Förderer (4, 130) an der Überführungsstation (I, O) in einer idealen gegenseitigen Position im Verhältnis zueinander angeordnet werden können,
**dadurch gekennzeichnet, dass** sie umfasst:
- Sensormittel (20, 21, 22) zum Erfassen einer Menge, die mit dem Vibrationszustand mindestens eines des ersten und des zweiten Förderers (105, 4; 4, 130) in Verbindung steht, und
- eine Steuereinheit (25), die dafür konfiguriert ist, auf der Grundlage der im Gebrauch von dem Sensormittel (20, 21, 22) erfassten Menge die tatsächliche gegenseitige Position des ersten Förderers (105, 4) und des zweiten Förderers (4, 130) im Verhältnis zueinander zu erkennen.

2. Bearbeitungseinheit nach Anspruch 1, **dadurch gekennzeichnet, dass** der erste und der zweite Förderer (105, 4; 4, 130) umfassen:
- einen entsprechenden feststehenden Rahmen (132; 135) und
- ein entsprechendes bewegliches Element (111, 107; 136, 137, 139), das im Verhältnis zu dem feststehenden Rahmen (132) beweglich ist.

3. Bearbeitungseinheit nach Anspruch 1 oder 2, **dadurch gekennzeichnet, dass** mindestens einer des ersten Abschnitts und des zweiten Abschnitts (S, Q; Q, U) zumindest teilweise gekrümmt ist, wobei der erste Abschnitt (S, Q) und der zweite Abschnitt (Q, U) an der Überführungsstation (I, O) im Verhältnis zueinander inzident sind.

4. Bearbeitungseinheit nach einem der vorhergehenden Ansprüche, **dadurch gekennzeichnet, dass** die Steuereinheit (25) konfiguriert ist für:
- das Außerachtlassen des Wertes der Menge entlang einer ersten Strecke (S1; U1) des mindestens einen (S; U) des ersten und des zweiten Abschnitts (S, Q; Q, U) und
- das Erkennen der tatsächlichen gegenseitigen Position des ersten Förderers (4, 130) und des zweiten Förderers (130, 131) im Verhältnis zueinander, auf der Grundlage des Wertes der Menge nur entlang einer zweiten Strecke (S2, U2) des mindestens einen (S; U) des ersten und des zweiten Abschnitts (S, Q; Q, U).

5. Bearbeitungseinheit nach Anspruch 4, wenn abhängig von Anspruch 2 oder 3, **dadurch gekennzeichnet, dass** das bewegliche Element (111, 137) die Gegenstände (2) im Gebrauch entlang der zweiten Strecke (S2, U2) berührt und im Gebrauch entlang der ersten Strecke (S1, U1) von den Gegenständen (2) gelöst ist.

6. Bearbeitungseinheit nach einem der vorhergehenden Ansprüche, **dadurch gekennzeichnet, dass** der erste Förderer (105, 4) und der zweite Förderer (4, 130) jeweils mehrere erste und zweite Sitze (111, 17, 137; 17, 137) umfassen,
wobei jeder Gegenstand (2) im Gebrauch an der Überführungsstation (I, O) von einem relativen ersten Sitz (111, 17, 137) zu einem relativen zweiten Sitz (17, 137) überführt wird.

7. Bearbeitungseinheit nach einem der vorhergehenden Ansprüche, **dadurch gekennzeichnet, dass** sie einen Waschtunnel (3) umfasst, in dessen Innerem die Gegenstände (2) gewaschen werden.

8. Bearbeitungseinheit nach Anspruch 7, **dadurch gekennzeichnet, dass** der erste Förderer (105, 4, 130) eine Sequenzierungsvorrichtung (105) zum Vorrücken einer Sequenz aus einem oder mehreren Gegenständen (2) zu dem zweiten Förderer (4) ist,
der zweite Förderer (4) dafür eingerichtet ist, die Sequenzgegenstände (2) im Inneren des Waschtunnels (3) vorzurücken,
wobei die Sensormittel (20) an der Sequenzierungsvorrichtung (105) angeordnet sind, vorzugsweise an einem entsprechenden beweglichen Element (107, 108).

9. Bearbeitungseinheit nach Anspruch 7, **dadurch gekennzeichnet, dass** der erste Förderer (4) dafür eingerichtet ist, eine Sequenz der Gegenstände (2) im Inneren des Waschtunnels (3) vorzurücken,
wobei der zweite Förderer (4, 130, 131) eine Entladungsvorrichtung (130) ist, die im Gebrauch an der Überführungsstation (O) durch den ersten Förderer (4) mit der Sequenz gespeist wird und die dafür eingerichtet ist, die Gegenstände (2) hin zu einem weiteren Förderer (131) zu befördern,
wobei Sensormittel (21) an dem zweiten Förderer (130) angeordnet sind, vorzugsweise an einem entsprechenden beweglichen Element (136, 137, 139).

10. Bearbeitungseinheit nach Anspruch 9, **dadurch gekennzeichnet, dass** die Entladungsvorrichtung (130) wiederum umfasst:
- eine drehbare Welle (136),
- mehrere Finger (137), die an der Welle (136) angebracht und dafür eingerichtet sind, die Gegenstände (2) von der Überführungsstation (O) hin zu dem dritten Förderer (131) zu führen, und
- einen Rahmen (135), der zusammen mit der Welle (136) und den Fingern (137) integral drehbar ist,
wobei die Sensormittel (21) an dem Rahmen (135) angeordnet sind.

11. Bearbeitungseinheit nach Anspruch 9 oder 10, **dadurch gekennzeichnet, dass** sie einen Ausgabeförderer (131) umfasst, der im Gebrauch von der Entladungsvorrichtung (130) mit den Sequenzen von Gegenständen (2) gespeist wird,
wobei die Sensormittel (22) an dem zweiten Förderer (131) angebracht sind, vorzugsweise an dem entsprechenden feststehenden Rahmen (160).

12. Bearbeitungseinheit nach einem der vorhergehenden Ansprüche, **dadurch gekennzeichnet, dass** die Erfassungsmittel (20, 21, 22) einen Beschleunigungsmesser umfassen, vorzugsweise einen monoaxialen Beschleunigungsmesser.

13. Verfahren zum Bearbeiten von Gegenständen (2), folgende Schritte umfassend:
i) Befördern der Gegenstände (2) entlang eines ersten Abschnitts (R, S) eines Weges (M) mittels mindestens eines ersten Förderers (103, 4),
ii) Befördern der Gegenstände (2) entlang eines zweiten Abschnitts (S, U) des Weges (M) mittels mindestens eines zweiten Förderers (4, 130),
iii) Überführen der Gegenstände (2) von dem ersten Förderer (103, 4) zu dem zweiten Förderer (4, 130, 131) an einer Überführungsstation (I, O),
wobei der erste Förderer (103, 4) und der zweite Förderer (4, 130) an der Überführungsstation (I, O) in einer idealen gegenseitigen Position im Verhältnis zueinander angeordnet werden können,
**dadurch gekennzeichnet, dass** es folgende weitere Schritte umfasst:
iv) Erfassen einer Menge, die mit dem Vibrationszustand mindestens eines des ersten und des zweiten Förderers (103, 4; 4, 130) in Verbindung steht, und
v) Erkennen der tatsächlichen gegenseitigen Position des ersten und des zweiten Förderers (103, 4; 4, 130) im Verhältnis zueinander auf der Grundlage der Menge.

14. Verfahren nach Anspruch 13, wobei mindestens einer des ersten (S, Q) und des zweiten Abschnitts (Q, U) zumindest teilweise gekrümmt ist, wobei der erste Abschnitt (S, Q) und der zweite Abschnitt (Q, U) an der Überführungsstation (I, O) im Verhältnis zueinander inzident sind,
wobei das Verfahren **dadurch gekennzeichnet ist, dass** es die folgenden weiteren Schritte umfasst:
vi) Außerachtlassen des Wertes der Menge entlang einer ersten Strecke (S1; U1) des mindestens einen (S; U) des ersten und des zweiten Abschnitts (S, Q; Q, U) und
vii) Erkennen der tatsächlichen gegenseitigen Position des ersten und des zweiten Förderers (105, 4; 4, 130) im Verhältnis zueinander, auf der Grundlage des Wertes der Menge entlang einer zweiten Strecke (S2; U2) des mindestens einen (S, U) des ersten und des zweiten Abschnitts (S, Q; Q, U) .

15. Verfahren nach Anspruch 13 oder 14, **dadurch gekennzeichnet, dass** es die folgenden weiteren Schritte umfasst:
viii) Vorrücken einer Sequenz aus einem oder mehreren Gegenständen (2) im Inneren eines Waschtunnels (3).

16. Verfahren nach Anspruch 15, **dadurch gekennzeichnet, dass** der Schritt viii) mittels des ersten Förderers (4) ausgeführt wird,
wobei das Verfahren die folgenden weiteren Schritte umfasst:
ix) Waschen der Gegenstände (2) im Inneren des Waschtunnels (3) und
x) Vorrücken der Sequenz der Gegenstände (2) im Inneren des Waschtunnels (3) mittels des zweiten Förderers (4),
wobei der Schritt iv) einen Schritt xi) des Erfassens einer Menge umfasst, die mit dem Vibrationszustand des ersten Förderers (105) in Verbindung steht, vorzugsweise mit dem Vibrationszustand eines beweglichen Elements (107, 108) des ersten Förderers (105) in Verbindung steht.

17. Verfahren nach Anspruch 15, **dadurch gekennzeichnet, dass** es die folgenden weiteren Schritte umfasst:
xii) Waschen der Gegenstände (2) im Inneren des Waschtunnels (3) und
xiii) Vorrücken der Gegenstände (2) im Inneren des Waschtunnels (3) mittels des ersten Förderers (4) und
xiv) Führen der Sequenz der gewaschenen Gegenstände (2) zum zweiten Förderer (130) an der Überführungsstation (O),
wobei der Schritt iv) einen Schritt xv) des Erfassens einer Menge umfasst, die mit dem Vibrationszustand des zweiten Förderers (130) in Verbindung steht, vorzugsweise mit dem Vibrationszustand eines beweglichen Elements (136, 137) des zweiten Förderers (130) in Verbindung steht.

18. Verfahren nach einem der Ansprüche 15 bis 17, **dadurch gekennzeichnet, dass** es die folgenden weiteren Schritte des xv) Führens der gewaschen Gegenstände (2) von dem zweiten Förderer (130) zu einem dritten Förderer (131) an einer weiteren Überführungsstation (T),
wobei der Schritt iv) einen Schritt xvi) des Erfassens einer Menge umfasst, die mit dem Vibrationszustand des zweiten Förderers (131) in Verbindung steht, vorzugsweise mit dem Vibrationszustand eines Rahmens (160) des zweiten Förderers (131) in Verbindung steht.

## Revendications

1. Unité de traitement (1) pour traiter des articles (2), comprenant des moyens transporteurs (105, 4, 130, 131) pour faire avancer lesdits articles (2) le long d'un chemin (M) ;
lesdits moyens transporteurs (105, 4, 130, 131) comprenant, successivement :
- au moins un premier transporteur (105, 4) qui fait avancer lesdits articles (2) le long d'une première partie (S, Q) dudit chemin (M) ; et
- au moins un deuxième transporteur (4, 130), qui fait avancer lesdits articles (2) le long d'une deuxième partie (Q, U) dudit chemin (M) ; ledit deuxième transporteur (4, 130) étant agencé immédiatement en aval dudit premier transporteur (105, 4) en progressant selon la direction d'avancée desdits articles (2) le long dudit chemin (M) et adapté à recevoir, lors de l'utilisation, lesdits articles (2) depuis ledit premier transporteur (105, 4, 130) au niveau d'un poste de transfert (I, O) ;
lesdits premier transporteur (105, 4) et deuxième transporteur (4, 130) étant agençables dans une position mutuelle idéale l'un par rapport à l'autre au niveau dudit poste de transfert (I, O) ;
**caractérisée en ce qu'**elle comprend :
- des moyens capteurs (20, 21, 22) pour détecter une quantité associée à l'état vibratoire d'au moins un parmi ledit premier et deuxième transporteur (105, 4 ; 4, 130) ; et
- une unité de commande (25) configurée pour détecter la position mutuelle effective desdits premier transporteur (105, 4) et deuxième transporteur (4, 130) l'un par rapport à l'autre, en fonction de ladite quantité détectée, lors de l'utilisation, par lesdits moyens capteurs (20, 21, 22).

2. Unité de traitement selon la revendication 1, **caractérisée en ce que** chaque dit premier et deuxième transporteur (105, 4 ; 4, 130) comprend :
- un bâti fixe (132 ; 135) respectif ; et
- un élément mobile (111, 107 ; 136, 137, 139) respectif, qui est mobile par rapport audit bâti fixe (132) .

3. Unité de traitement selon la revendication 1 ou 2, **caractérisée en ce qu'**au moins une parmi lesdites première partie et deuxième partie (S, Q ; Q, U) est au moins en partie incurvée ; ladite première partie (S, Q) et ladite deuxième partie (Q, U) étant incidentes l'une par rapport à l'autre au niveau dudit poste de transfert (I, O).

4. Unité de traitement selon l'une quelconque des revendications précédentes, **caractérisée en ce que** ladite unité de commande (25) est configurée pour :
- rejeter la valeur de ladite quantité le long d'un premier tronçon (S1 ; U1) de ladite au moins une (S ; U) parmi ladite première ou deuxième partie (S, Q ; Q, U) ; et
- détecter la position mutuelle effective desdits premier transporteur (4, 130) et deuxième transporteur (130, 131) l'un par rapport à l'autre, en fonction de la valeur de ladite quantité uniquement le long d'un deuxième tronçon (S2, U2) de ladite au moins une (S ; U) parmi ladite première ou deuxième partie (S, Q ; Q, U).

5. Unité de traitement selon la revendication 4, lorsqu'elle dépend de la revendication 2 ou 3, **caractérisée en ce que** ledit élément mobile (111, 137) vient au contact, lors de l'utilisation, desdits articles (2) le long dudit deuxième tronçon (S2, U2) et est séparé, lors de l'utilisation, desdits articles (2) le long dudit premier tronçon (S1, U1).

6. Unité de traitement selon l'une quelconque des revendications précédentes, **caractérisée en ce que** lesdits premier transporteur (105, 4) et deuxième transporteur (4, 130) comprennent une pluralité respective de premiers et deuxièmes sièges (111, 17, 137 ; 17, 137) ;
chaque dit article (2) étant transféré, lors de l'utilisation, depuis un dit premier siège (111, 17, 137) relatif jusqu'à un dit deuxième siège (17, 137) relatif au niveau dudit poste de transfert (I, O).

7. Unité de traitement selon l'une quelconque des revendications précédentes, **caractérisée en ce qu'**elle comprend un tunnel de lavage (3) à l'intérieur duquel lesdits articles (2) sont lavés.

8. Unité de traitement selon la revendication 7, **caractérisée en ce que** ledit premier transporteur (105, 4, 130) est un dispositif séquenceur (105) pour faire avancer une séquence d'un ou de plusieurs articles (2) jusqu'audit deuxième transporteur (4) ;
ledit deuxième transporteur (4) étant adapté à faire avancer lesdites articles de séquence (2) à l'intérieur dudit tunnel de lavage (3) ;
lesdits moyens capteurs (20) étant agencés sur ledit dispositif séquenceur (105), de préférence sur ledit élément mobile (107, 108) respectif.

9. Unité de traitement selon la revendication 7, **caractérisée en ce que** ledit premier transporteur (4) est adapté à faire avancer une séquence desdits articles (2) à l'intérieur dudit tunnel de lavage (3) ;
ledit deuxième transporteur (4, 130, 131) étant un dispositif d'évacuation (130), auquel est amenée, lors de l'utilisation, ladite séquence par ledit premier transporteur (4) au niveau dudit poste de transfert (O) et qui est adapté à transporter lesdits articles (2) vers un transporteur supplémentaire (131) ;
lesdits moyens capteurs (21) étant agencés sur ledit deuxième transporteur (130), de préférence sur ledit élément mobile (136, 137, 139) respectif.

10. Unité de traitement selon la revendication 9, **caractérisée en ce que** ledit dispositif d'évacuation (130) comprend, successivement :
- un arbre rotatif (136) ;
- une pluralité de doigts (137), qui sont montés sur ledit arbre (136) et sont adaptés à guider lesdits articles (2) depuis ledit poste de transfert (O) en direction dudit troisième transporteur (131) ; et
- un bâti (135) solidaire en rotation dudit arbre (136) et desdits doigts (137) ;
lesdits moyens capteurs (21) étant agencés sur ledit bâti (135).

11. Unité de traitement selon la revendication 9 ou 10, **caractérisée en ce qu'**elle comprend un transporteur de sortie (131) auquel sont amenées, lors de l'utilisation, lesdites séquences d'articles (2) par ledit dispositif d'évacuation (130) ;
lesdits moyens capteurs (22) étant montés sur ledit deuxième transporteur (131), de préférence sur ledit bâti fixe (160) respectif.

12. Unité de traitement selon l'une quelconque des revendications précédentes, **caractérisée en ce que** lesdits moyens de détection (20, 21, 22) comprennent un accéléromètre, de préférence un accéléromètre uniaxial.

13. Procédé de traitement d'articles (2), comprenant les étapes suivantes :
i) transport desdits articles (2) le long d'une première partie (R ; S) d'un chemin (M) au moyen d'au moins un premier transporteur (103, 4) ;
ii) transport desdits articles (2) le long d'une deuxième partie (S ; U) dudit chemin (M) au moyen d'au moins un deuxième transporteur (4, 130) ;
iii) transfert desdits articles (2) depuis ledit premier transporteur (103, 4) jusqu'audit deuxième transporteur (4 ; 130 ; 131) au niveau d'un poste de transfert (I, O) ;
ledit premier transporteur (103, 4) et ledit deuxième transporteur (4, 130) étant agençables dans une position mutuelle idéale l'un par rapport à l'autre au niveau dudit poste de transfert (I ; O) ;
**caractérisé en ce qu'**il comprend les étapes supplémentaires suivantes :
iv) détection d'une quantité associée à l'état vibratoire d'au moins un parmi ledit premier et deuxième transporteur (103, 4 ; 4, 130) ; et
v) détection de la position mutuelle effective dudit premier et deuxième transporteur (103, 4 ; 4, 130) l'un par rapport à l'autre, en fonction de ladite quantité.

14. Procédé selon la revendication 13, dans lequel au moins une parmi ladite première partie (S, Q) et ladite deuxième partie (Q, U) est au moins en partie incurvée ; lesdites première partie (S, Q) et deuxième partie (Q, U) étant incidentes au niveau dudit poste de transfert (I, O) ;
ledit procédé étant **caractérisé en ce qu'**il comprend les étapes supplémentaires suivantes :
vi) rejet de la valeur de ladite quantité le long d'un premier tronçon (S1 ; U1) de ladite au moins une (S ; U) parmi ladite première ou deuxième partie (S, Q ; Q, U) ; et
vii) détection de la position mutuelle effective dudit premier et deuxième transporteur (105, 4 ; 4, 130) l'un par rapport à l'autre, en fonction de la valeur de ladite quantité uniquement le long d'un deuxième tronçon (S2 ; U2) de ladite au moins une (S, U) parmi ladite première ou deuxième partie (S, Q ; Q, U).

15. Procédé selon la revendication 13 ou 14, **caractérisé en ce qu'**il comprend les étapes supplémentaires suivantes :
viii) avancée d'une séquence d'un ou de plusieurs desdits articles (2) à l'intérieur d'un tunnel de lavage (3) .

16. Procédé selon la revendication 15, **caractérisé en ce que** ladite étape viii) est réalisée au moyen dudit premier transporteur (4) ;
le procédé comprenant l'étape supplémentaire suivante :
ix) lavage desdits articles (2) à l'intérieur dudit tunnel de lavage (3) ; et
x) avancée de ladite séquence desdits articles (2) à l'intérieur dudit tunnel de lavage (3) au moyen dudit deuxième transporteur (4) ;
ladite étape iv) comprenant une étape xi) de détection d'une quantité associée à l'état vibratoire dudit premier transporteur (105), de préférence associée à l'état vibratoire d'un élément mobile (107, 108) dudit premier transporteur (105).

17. Procédé selon la revendication 15, **caractérisé en ce qu'**il comprend les étapes supplémentaires suivantes :
xii) lavage desdits articles (2) à l'intérieur dudit tunnel de lavage (3) ; et
xiii) avancée desdits articles (2) à l'intérieur dudit tunnel de lavage (3) au moyen dudit premier transporteur (4) ; et
xiv) amenée de ladite séquence desdits articles (2) lavés audit deuxième transporteur (130) au niveau dudit poste de transfert (O) ;
ladite étape iv) comprenant une étape xv) de détection d'une quantité associée à l'état vibratoire dudit deuxième transporteur (130), de préférence associée à l'état vibratoire d'un élément mobile (136, 137) dudit deuxième transporteur (130).

18. Procédé selon l'une quelconque des revendications 15 à 17, **caractérisé en ce qu'**il comprend les étapes supplémentaires de xv) amenée desdits articles (2) lavés dudit deuxième transporteur (130) à un troisième transporteur (131) au niveau d'un poste de transfert supplémentaire (T) ;
ladite étape iv) comprenant une étape xvi) de détection d'une quantité associée à l'état vibratoire dudit deuxième transporteur (131), de préférence associée à l'état vibratoire d'un bâti (160) dudit deuxième transporteur (131).
